# EUROPEAN PATENT SPECIFICATION

(11) **EP 4 509 941 B1**
(45) Date of publication and mention of the grant of the patent: **18.02.2026**
(21) Application number: 23213814.9
(22) Date of filing: 01.12.2023
(51) Int. Cl.: G05D 24/02

(54) **APPARATUS AND METHOD FOR PREDICTING AND CONTROLLING VISCOSITY OF SLURRY**
VORRICHTUNG UND VERFAHREN ZUR VORHERSAGE UND STEUERUNG DER VISKOSITÄT EINER AUFSCHLÄMMUNG
APPAREIL ET PROCÉDÉ DE PRÉDIRE ET RÉGULATION DE LA VISCOSITÉ D'UNE SUSPENSION

(30) Priority: 14.08.2023 KR 20230106081
(43) Date of publication of application: 19.02.2025
(73) Proprietor: Samsung SDI Co., Ltd., Yongin-si, Gyeonggi-do 17084 (KR)
(72) Inventor: KIM, Bo Ra, 16678 Suwon-si (KR); KIM, Yong Jin, 16678 Suwon-si (KR); KIM, Jake, 16678 Suwon-si (KR); AHN, Tae Sung, 16678 Suwon-si (KR); JUNG, Hee Chan, 16678 Suwon-si (KR); HWANG, Yong Jun, 16678 Suwon-si (KR); HAN, Jee Hoon, 16678 Suwon-si (KR); KIM, Jong Man, 16678 Suwon-si (KR); KIM, Gi Heon, 16678 Suwon-si (KR)
(74) Representative: Marks & Clerk LLP

(56) References cited:
- CN-A- 116 297 020
- US-A1- 2022 410 099
- US-A1- 2023 119 336

## Description

### Field of the Invention

The present invention relates to an apparatus and method for controlling viscosity of a slurry for electrode active materials.

### Description of the Related Art

In general, a process of manufacturing a secondary battery starts with mixing of raw materials.

Viscosity of the mixed slurry can indicate a mixed state of the raw materials.

Specifically, in the mixing process, an active material, a conductive material, and a binder are mixed with a solvent to form a slurry which in turn is supplied to a subsequent coating process.

Viscosity of the slurry thus prepared is required to meet prescribed specifications due to effects thereof not only on operation of the mixing process but also on the quality of subsequent processes.

In order to determine the viscosity of the slurry, the slurry is sampled immediately after the mixing process, followed by measurement of the viscosity of the slurry using a separate viscometer. When the measured viscosity of the slurry is out of specification, the viscosity of the slurry is controlled by changing conditions of the mixing process.

Such a sampling type slurry viscosity measurement method has a problem in that viscosity of a slurry can change during preparation for measurement and an additional complicated process, such as manual sampling by an operator using a separate measuring instrument, is required, causing additional consumption of resources, such as manpower and time.

Therefore, there is a need for technology that can achieve slurry viscosity meeting target specifications through real-time prediction of viscosity of a slurry while reducing errors in measurement of the viscosity of the slurry and eliminating the necessity of additional manual work and additional resource consumption.

The background technique of the present invention is disclosed in Korean Patent Registration No. 10-1985801 (May 29, 2019). Prior art document 1 [CN 116297020 A] discloses a lithium battery slurry viscosity prediction method comprising the steps that operation parameter data of a stirrer in the stirring process of target slurry within a preset time period is collected, obtaining the actual viscosity of the target slurry in a preset time period, and calculating the viscosity of the target slurry based on a pre-established slurry viscosity prediction model according to the operation parameter data of the stirrer to obtain
the first predicted viscosity of the target slurry. Prior art document 2 [US 2022/410099 A1] discloses a method for controlling polymer viscosity quality in a compounding process of polymers using at least one extruder.

### Summary of the Invention

The present invention has been conceived to solve such problems in the art and it is an aspect of the present invention to provide an apparatus and method for controlling viscosity of a slurry, which can predict a final viscosity of the slurry in real time during a
mixing process based on mixing process data highly correlated with the final viscosity and can control the viscosity of the slurry by changing conditions of the mixing process when the viscosity of the slurry is predicted to be out of specification.

In accordance with one aspect of the present invention, an apparatus for controlling viscosity of a slurry includes: a mixing module mixing raw materials for a secondary battery; and a processor performing machine learning for prediction of viscosity of the slurry, predicting viscosity of the slurry in real time during a mixing process through machine learning, and adjusting conditions of the mixing process performed by the mixing module such that a predictive viscosity of the slurry meets a target viscosity.

The processor may extract at least one mixing process datum highly correlated with viscosity of the slurry from multiple mixing process data through machine learning and may perform prediction of viscosity of the slurry based thereon.

The processor may generate a first model through training with N mixing process data and N final actual viscosity data using a predetermined algorithm, wherein the first model is a model for extraction of mixing process data highly correlated with a final viscosity of the slurry and prediction of viscosity of the slurry.

The processor may identify at least one topmost factor highly correlated with a final actual viscosity using a first model, may calculate multiple top factor data through preprocessing of the identified topmost factor for each mixing step, and may generate a second model through training with the multiple top factor data calculated for each mixing step and final actual viscosity data using a predetermined algorithm, wherein the second model is a model for extraction of mixing process data highly correlated with a final viscosity of the slurry and prediction of viscosity of the slurry.

The processor may check prediction accuracy of the second model. If the prediction accuracy of the second model is greater than or equal to a predetermined rate, the processor may retrain or update the second model each time new data is generated and, if the prediction accuracy of the second model is less than the predetermined rate, the processor may change the algorithm.

The processor may control the mixing module by: calculating a final predictive viscosity by inputting mixing process data to a second model upon start of mixing; calculating a new final predictive viscosity by changing settings of mixing process data identified to be highly correlated with a final actual viscosity of the slurry from a first model and the second model and inputting the mixing process data changed due to change of the settings back to the second model, if the final predictive viscosity does not meet the target viscosity; and calculating settings of mixing process factors ensuring that the final predictive viscosity meets the target viscosity by repeating a procedure of changing settings of mixing process data and calculating a final predictive viscosity until the final predictive viscosity is equal to the target viscosity.

In accordance with another aspect of the present invention, a method for controlling viscosity of a slurry includes: controlling, by a processor, a mixing module to mix raw materials for a secondary battery; performing, by the processer, machine learning for prediction of viscosity of the slurry and predicting viscosity of the slurry in real time during a mixing process through machine learning; and adjusting, by the processor, conditions of the mixing process performed by the mixing module such that a predictive viscosity of the slurry meets a target viscosity.

In the step of predicting viscosity of the slurry in real time, the processor may extract at least one mixing process datum highly correlated with viscosity of the slurry from multiple mixing process data through machine learning and may perform prediction of viscosity of the slurry based thereon.

In order to predict viscosity of the slurry in real time, the processor generates a first model through training with N mixing process data and N final actual viscosity data using a predetermined algorithm, wherein the first model is a model for extraction of mixing process data highly correlated with a final viscosity of the slurry and prediction of viscosity of the slurry.

In order to predict viscosity of the slurry in real time, the processor may identify at least one topmost factor highly correlated with a final actual viscosity using a first model, may calculate multiple top factor data through preprocessing of the identified topmost factor for each mixing step, and may generate a second model through training with the multiple top factor data calculated for each mixing step and final actual viscosity data using a predetermined algorithm, wherein the second model is a model for extraction of mixing process data highly correlated with a final viscosity of the slurry and prediction of viscosity of the slurry.

The processor may check prediction accuracy of the second model. If the prediction accuracy of the second model is greater than or equal to a predetermined rate, the processor may retrain or update the second model each time new data is generated and, if the prediction accuracy of the second model is less than the predetermined rate, the processor may change the algorithm.

In the step of adjusting conditions of the mixing process performed by the mixing module, the processor may control the mixing module by: calculating a final predictive viscosity by inputting mixing process data to a second model upon start of mixing; calculating a new final predictive viscosity by changing settings of mixing process data identified to be highly correlated with a final actual viscosity of the slurry from a first model and the second model and inputting the mixing process data changed due to change of the settings back to the second model, if the final predictive viscosity does not meet the target viscosity; and calculating settings of mixing process factors ensuring that the final predictive viscosity meets the target viscosity by repeating a procedure of changing settings of mixing process data and calculating a final predictive viscosity until the final predictive viscosity meets the target viscosity.

The apparatus and method for controlling viscosity of a slurry according to the present invention can predict a final viscosity of the slurry in real time during a mixing process based on mixing process data highly correlated with the final viscosity and can control the viscosity of the slurry by changing conditions of the mixing process when viscosity of the slurry is predicted to be out of specification.

The apparatus and method for controlling viscosity of a slurry according to the present invention can achieve slurry viscosity meeting desired specifications through real-time prediction of viscosity of a slurry while reducing errors in measurement of viscosity of the slurry and eliminating the necessity of additional manual work and additional resource consumption.

### Brief Description of Drawings

FIG. 1 is a schematic block diagram of an apparatus for controlling viscosity of a slurry according to one embodiment of the present invention.
FIG. 2 is a flow diagram of a method for generating a model for prediction of viscosity of a slurry according to one embodiment of the present invention.
FIG. 3 is a flow diagram of a method for changing mixing process conditions based on prediction of viscosity of a slurry according to one embodiment of the present invention.
FIG. 4 illustrates mixing process factors according to one embodiment of the present invention.
FIG. 5 illustrates prediction accuracy of a first model and a second model with respect to viscosity of a slurry according to one embodiment of the present invention.
FIG. 6 illustrates test results of factors identified to be highly correlated with a final actual viscosity (Y) from a first model and a second model according to one embodiment of the present invention.

### Detailed Description of the Invention

Herein, some embodiments of the present disclosure will be described, in further detail, with reference to the accompanying drawings. The terms or words used in this specification and claims should not be construed as being limited to the usual or dictionary meaning and should be interpreted to have a meaning and concept consistent with the technical idea of the present disclosure based and on the principle that the inventor can be their own lexicographer to appropriately define the concept of the term to explain their invention in the best way.

The embodiments described in this specification and the configurations shown in the drawings represent some of the embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. When a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or similar elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to the another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

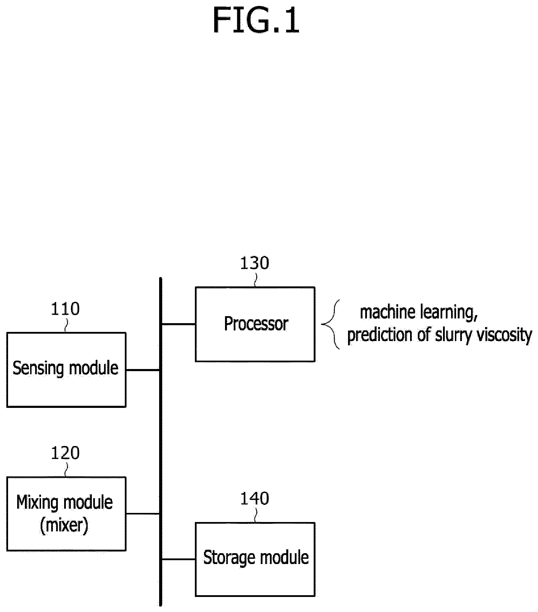

FIG. 1 is a schematic block diagram of an apparatus for controlling viscosity of a slurry according to one embodiment of the present invention.

Referring to FIG. 1, the apparatus for controlling viscosity of a slurry according to this embodiment may include a sensing module 110, a mixing module 120 (for example, a planetary despa (P/D) mixer), a processor 130, and a storage module 140.

The sensing module 110 may detect information about operation of the mixing module 120 (for example, a P/D mixer) (or information about a status of a mixing process). The sensing module 110 may include multiple sensors (for example, a temperature sensor, an infrared sensor, a camera sensor, a current detection sensor, etc.) adapted to detect information about operation of the mixing module 120 (or information about the status of a mixing process).

The processor 130 may perform machine learning (or deep learning) for prediction of the viscosity of the slurry and may predict the viscosity of the slurry in real time during a mixing process through machine learning (or deep learning).

The mixing process causes changes in size of solids in the slurry and thus changes in viscosity of the slurry depending on the surface area fraction of the solids dispersed in the slurry. In order to perform dispersion of the solids, a specific blade (for example, a planetary blade, a Despa blade, etc.) is rotated at a predetermined power. Here, depending on conditions of the mixing process, the degree of dispersion of the solids varies, causing variation in viscosity of the slurry. Rheological studies have also shown that there is a correlation between power required to rotate the blade and viscosity of the slurry, which indicates that viscosity of the slurry can be estimated backwards from the conditions of the mixing process performed by the blade.

The processor 130 may perform prediction of viscosity of the slurry (or develop a model for prediction of viscosity of the slurry) by extracting mixing process data (that is, a mixing process factor) highly correlated with viscosity of the slurry from multiple mixing process data (that is, multiple mixing process factors) through machine learning.

The processor 130 may extract mixing process data (mixing process factor) highly correlated with a final viscosity of the slurry from multiple mixing process data (multiple mixing process factors) and may predict the final viscosity of the slurry based on the extracted mixing process data (mixing process factor).

The storage module 140 may store the multiple mixing process data (mixing process factors), such as power of a mixer, rpm of the blade, and operating time of the blade.

The storage module 140 may store a model for prediction of viscosity of the slurry.

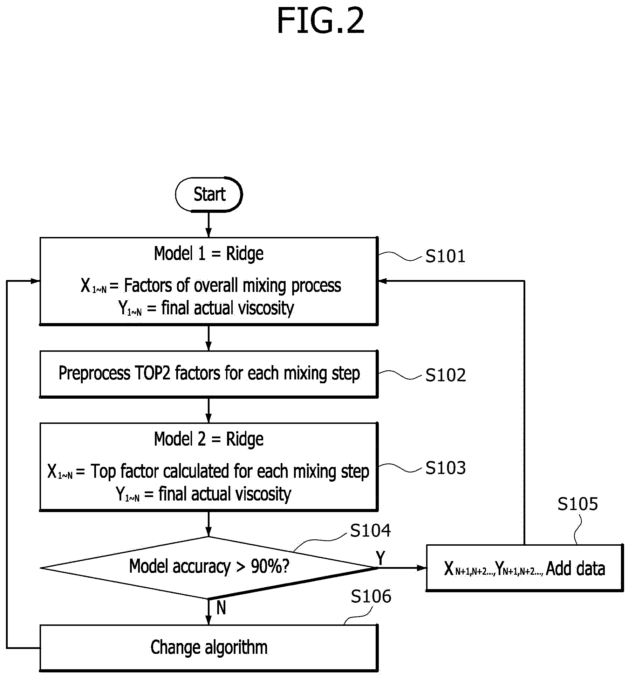

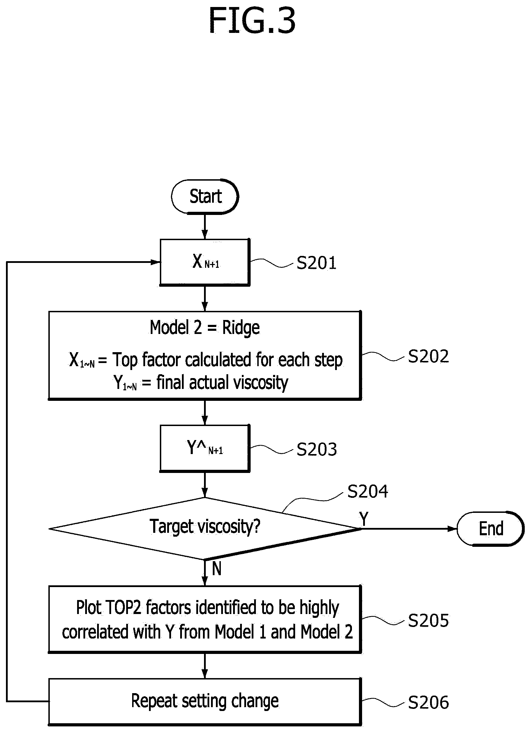

In the following, a method for controlling viscosity of a slurry to meet specifications by changing mixing process conditions based on prediction of viscosity of the slurry will be described with reference to FIG. 2 and FIG. 3.

FIG. 2 is a flow diagram of a method for generating a model for prediction of viscosity of a slurry according to one embodiment of the present invention.

Referring to FIG. 2, the processor 130 generates a first model Model 1 (for example, a model for extraction of mixing process data highly correlated with a final viscosity of the slurry and prediction of viscosity of the slurry) through training with N mixing process data (mixing process factors) X (X_{1 to N}) and N final actual viscosity data Y (Y_{1 to N}) using a predetermined algorithm (for example, Ridge algorithm) (S101).

Here, each of the N mixing process data (mixing process factors) X (X_{1 to N}) (that is, mixing process factors) may be represented by an average value and a shear rate for acquiring the N final actual viscosity data Y (Y_{1 to N}) may be set to a predetermined value (for example, shear rate: 10).

The processor 130 identifies at least one topmost factor TOP2 highly correlated with a final actual viscosity Y using the first model Model 1 and calculates multiple (for example, 46) top factors through preprocessing of the identified topmost factor TOP2 for each mixing step (S102).

The processor 130 generates a second model Model 2 (for example, a model for extraction of mixing process data highly correlated with the final viscosity of the slurry and prediction of viscosity of the slurry) through training with the multiple (for example, 46) top factor data X (X_{1 to N}) calculated for each mixing step and the final actual viscosity data Y (Y_{1 to N}) using a predetermined algorithm (for example, Ridge algorithm) (S103).

The processor 130 checks prediction accuracy of the second model Model 2 (S104). If the prediction accuracy of the second model is greater than or equal to a predetermined rate (for example, 90%) (or if the prediction accuracy of the second model is greater than the predetermined rate), the processor 130 retrains or updates the second model with new data (X_{N+1}, _{N+2},..., Y_{N+1}, _{N+2}...) generated after modeling (S105). This procedure may be repeatedly performed whenever new data is generated.

If the prediction accuracy of the second model Model 2 is less than the predetermined rate (for example, 90%) (if No is selected in step S104), the processor 130 may change the algorithm (for example, may change Ridge algorithm (a linear algorithm) to another algorithm (a non-linear algorithm) (S106).

FIG. 3 is a flow diagram of a method for changing mixing process conditions based on prediction of viscosity of a slurry according to one embodiment of the present invention.

Referring to FIG. 3, when N+1^{st} data (X_{N+1}) is input to the second model Model 2 upon start of mixing (S201), the processor 130 uses the second model Model 2 (S202) to calculate a final predictive viscosity Y^_{N+1} (S203).

The processor 130 checks whether the calculated final predictive viscosity Y^_{N+1} is equal to a target viscosity (that is, a target slurry viscosity) (S204). If the calculated final predictive viscosity Y^_{N+1} is equal to the target viscosity (if Yes is selected in step S204), the processor 130 terminates a mixing process condition changing process.

If the calculated final predictive viscosity Y^_{N+1} is not equal to the target viscosity (that is, the target slurry viscosity) (if No is selected in step S204), the processor 130 changes settings of mixing process data (mixing process factor) identified to be highly correlated with the final actual viscosity Y from the first model and the second model (that is, changes mixing process conditions) (S206) and inputs the mixing process data X_{N+1}, which is changed due to change of the settings, to the second model Model 2 to calculate a new final predictive viscosity Y^_{N+1}.

This procedure (that is, a procedure of changing settings of mixing process factors (that is, changing mixing process conditions) and calculating a final predictive viscosity for achievement of a target viscosity) is repeated until the final predictive viscosity Y^_{N+1} meets the target viscosity (S207).

In this way, the processor may control the mixing module 120 by calculating settings of mixing process factors (mixing process conditions) ensuring that the final predictive viscosity (Y^_{N+1}) meets the target viscosity.

As described above, the apparatus and method according to the present invention can provide real-time prediction of a final viscosity of a slurry during a mixing process based on mixing process data highly correlated with the final viscosity of the slurry and can control viscosity of the slurry to a target viscosity by changing mixing process conditions (that is, changing settings of mixing process factors) when viscosity of the slurry is predicted to be out of specification.

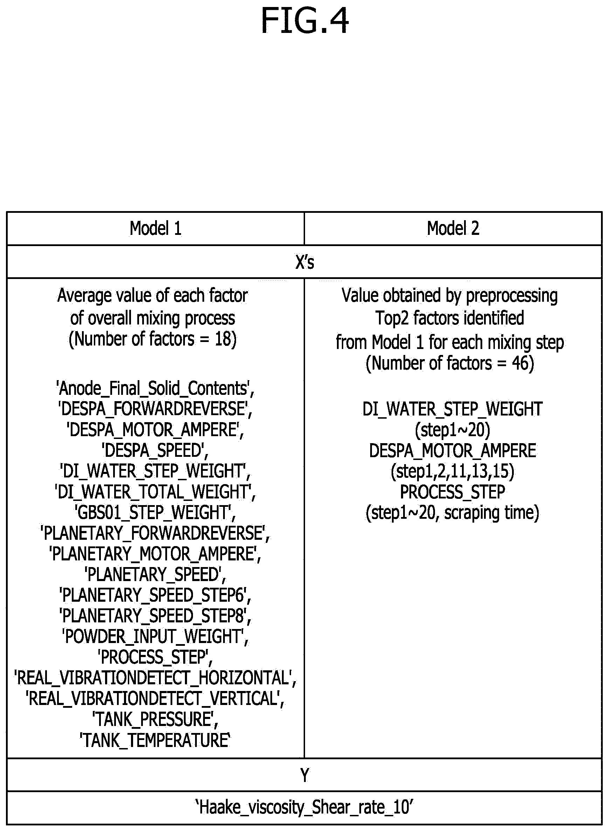

FIG. 4 illustrates mixing process factors according to one embodiment of the present invention.

Referring to FIG. 4, a first model according to this embodiment determines correlation between viscosity of a slurry and 18 factors and a second model according to this embodiment determines correlation between viscosity of the slurry and 46 factors. Although a linear algorithm (for example, Ridge algorithm) was used to generate the first model and the second model, it will be understood that the present invention is not limited thereto and various other algorithms may be used.

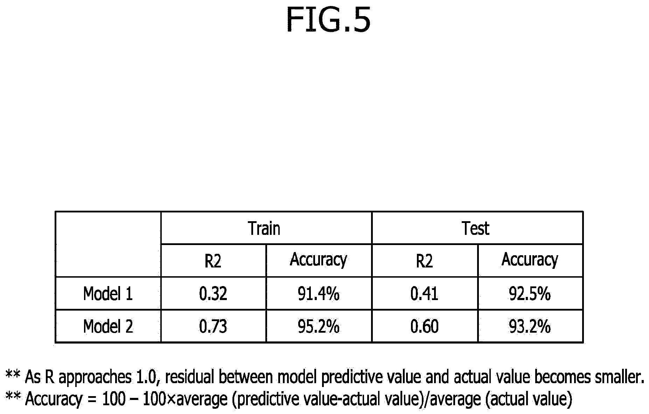

FIG. 5 illustrates prediction accuracy of a first model and a second model with respect to viscosity of a slurry according to one embodiment of the present invention.

Referring to FIG. 5, a first model having an accuracy of 92.5% is generated through machine learning, two topmost factors is calculated from the first model, and a second model is generated through preprocessing of the two topmost factors for each mixing step. The second model produces improved slurry viscosity prediction results with an accuracy of 93% and a residual of 0.6, as compared with the first model.

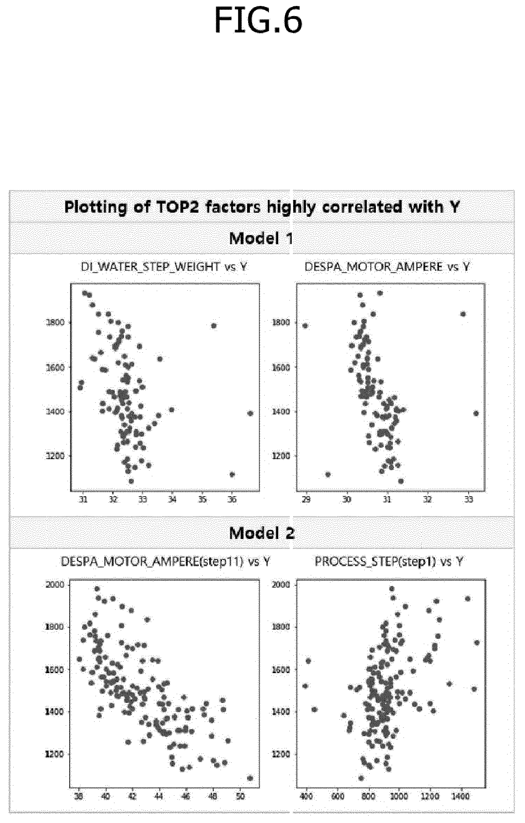

FIG. 6 illustrates test results of factors identified to be highly correlated with a final actual viscosity Y from a first model and a second model according to one embodiment of the present invention.

Referring to FIG. 6, from the first model, two factors (for example, DI_WATER_STEP_WEIGHT and DESPA_MOTOR_AMPERE) were identified to be highly correlated with the final actual viscosity and, from the second model, DESPA_MOTOR_AMPERE (step 11) and PROCESS_STEP (step 1) were identified to be highly correlated with the final actual viscosity based on results of analysis of correlation between viscosity of a slurry and the two topmost factors identified from the first model for each mixing step.

## Claims

1. An apparatus for controlling viscosity of a slurry, comprising:
a mixing module (120) for mixing raw materials for a secondary battery; and
a processor (130) configured to perform machine learning for prediction of viscosity of the slurry, predict viscosity of the slurry in real time during a mixing process through machine learning, and to adjust conditions of the mixing process performed by the mixing module (120) such that a predictive viscosity of the slurry meets a target viscosity;
wherein the processor (130) is configured to:
generate a first model based on mixing process data and a final actual viscosity data, the first model being a model for extraction of mixing process data highly correlated with a final viscosity of the slurry,
identify at least one topmost factor highly correlated with a final actual viscosity using a first model, calculate multiple top factor data through preprocessing of the identified topmost factor for each mixing step, and generate a second model based on the multiple top factor data calculated for each mixing step, the second model being a model for prediction of viscosity of the slurry, and
calculate a final predictive viscosity by inputting mixing process data to a second model upon start of mixing.

2. The apparatus according to claim 1, wherein the processor (130) is configured to extract at least one mixing process datum highly correlated with viscosity of the slurry from multiple mixing process data through machine learning and performs prediction of viscosity of the slurry based thereon.

3. The apparatus according to claim 1 or 2, wherein the processor (130) is configured to generate the first model through training with N mixing process data and N final actual viscosity data using a predetermined algorithm.

4. The apparatus according to claim 1, 2 or 3, wherein the processor (130) is configured to generate the second model through training with the multiple top factor data calculated for each mixing step and final actual viscosity data using a predetermined algorithm.

5. The apparatus according to claim 4, wherein:
the processor (130) is configured to check prediction accuracy of the second model; and,
if the prediction accuracy of the second model is greater than or equal to a predetermined rate, the processor (130) retrains or updates the second model each time new data is generated and, if the prediction accuracy of the second model is less than the predetermined rate, the processor (130) changes the algorithm.

6. The apparatus according to any one of claims 1 to 5, wherein the processor (130) is configured to control the mixing module (120) by:
calculating a new final predictive viscosity by changing settings of mixing process data identified to be highly correlated with a final actual viscosity of the slurry from a first model and the second model and inputting the mixing process data changed due to change of the settings to the second model, if the final predictive viscosity does not meet the target viscosity; and
calculating settings of mixing process factors ensuring that the final predictive viscosity meets the target viscosity by repeating a procedure of changing settings of mixing process data and calculating a final predictive viscosity until the final predictive viscosity meets the target viscosity.

7. A method for controlling viscosity of a slurry, comprising:
controlling, by a processor (130), a mixing module (120) to mix raw materials for a secondary battery;
performing, by the processer (130), machine learning for prediction of viscosity of the slurry and predicting viscosity of the slurry in real time during a mixing process through machine learning; and
adjusting, by the processor (130), conditions of the mixing process performed by the mixing module (120) such that a predictive viscosity of the slurry meets a target viscosity,
in order to predict viscosity of the slurry in real time, the processor (130) is configured to:
generate a first model based on mixing process data and a final actual viscosity data, the first model being a model for extraction of mixing process data highly correlated with a final viscosity of the slurry,
identify at least one topmost factor highly correlated with a final actual viscosity using a first model, calculates multiple top factor data through preprocessing of the identified topmost factor for each mixing step, and generate a second model based on the multiple top factor data calculated for each mixing step, the second model being a model for prediction of viscosity of the slurry, and
calculate a final predictive viscosity by inputting mixing process data to a second model upon start of mixing.

8. The method according to claim 7, wherein, in the step of predicting viscosity of the slurry in real time, the processor (130) extracts at least one mixing process datum highly correlated with viscosity of the slurry from multiple mixing process data through machine learning and performs prediction of viscosity of the slurry based thereon.

9. The method according to claim 7 or 8, wherein the processor (130) generates the first model through training with N mixing process data and N final actual viscosity data using a predetermined algorithm.

10. The method according to claim 7, 8 or 9, wherein the processor (130) generates the second model through training with the multiple top factor data calculated for each mixing step and final actual viscosity data using a predetermined algorithm.

11. The method according to claim 10, wherein:
the processor (130) checks prediction accuracy of the second model; and,
when the prediction accuracy of the second model is greater than or equal to a predetermined rate, the processor (130) retrains or updates the second model each time new data is generated and, when the prediction accuracy of the second model is less than the predetermined rate, the processor (130) changes the algorithm.

12. The method according to any one of claims 7 to 11, wherein, in the step of adjusting conditions of the mixing process performed by the mixing module (120), the processor (130) controls the mixing module (120) by:
calculating a new final predictive viscosity by changing settings of mixing process data identified to be highly correlated with a final actual viscosity of the slurry from a first model and the second model and inputting the mixing process data changed due to change of the settings back to the second model, if the final predictive viscosity does not meet the target viscosity; and
calculating settings of mixing process factors ensuring that the final predictive viscosity meets the target viscosity by repeating a procedure of changing settings of mixing process data and calculating a final predictive viscosity until the final predictive viscosity meets the target viscosity.

## Patentansprüche

1. Einrichtung zur Steuerung der Viskosität einer Aufschlämmung, umfassend:
ein Mischmodul (120) zum Mischen von Rohstoffen für eine Sekundärbatterie; und
einen Prozessor (130), der so konfiguriert ist, dass er maschinelles Lernen zur Vorhersage der Viskosität der Aufschlämmung durchführt, die Viskosität der Aufschlämmung während eines Mischprozesses in Echtzeit durch maschinelles Lernen vorhersagt und die Bedingungen des vom Mischmodul (120) durchgeführten Mischprozesses so anpasst, dass die vorhergesagte Viskosität der Aufschlämmung einer Sollviskosität entspricht;
wobei der Prozessor (130) konfiguriert ist zum:
Erzeugen eines ersten Modells auf der Grundlage von Mischprozessdaten und endgültigen tatsächlichen Viskositätsdaten, wobei das erste Modell ein Modell zur Extraktion von Mischprozessdaten ist, die in hohem Maße mit der endgültigen Viskosität der Aufschlämmung korrelieren,
Identifizieren mindestens eines obersten Faktors, der mit einer endgültigen tatsächlichen Viskosität unter Verwendung eines ersten Modells in hohem Maße korreliert, Berechnen mehrerer oberster Faktordaten durch Vorverarbeitung des identifizierten obersten Faktors für jeden Mischschritt und Erzeugen eines zweiten Modells auf der Grundlage der für jeden Mischschritt berechneten mehreren oberen Faktordaten, wobei das zweite Modell ein Modell zur Vorhersage der Viskosität der Aufschlämmung ist, und
Berechnen einer endgültigen vorhergesagten Viskosität durch Eingabe der Mischprozessdaten in ein zweites Modell zu Beginn des Mischens.

2. Einrichtung nach Anspruch 1, wobei der Prozessor (130) so konfiguriert ist, dass er mindestens einen Mischprozessdatenwert, der in hohem Maße mit der Viskosität der Aufschlämmung korreliert, aus mehreren Mischprozessdaten durch maschinelles Lernen extrahiert und auf dieser Grundlage eine Vorhersage der Viskosität der Aufschlämmung durchführt.

3. Einrichtung nach Anspruch 1 oder 2, wobei der Prozessor (130) so konfiguriert ist, dass er das erste Modell durch Training mit N Mischprozessdaten und N endgültigen tatsächlichen Viskositätsdaten unter Verwendung eines vorbestimmten Algorithmus erzeugt.

4. Einrichtung nach Anspruch 1, 2 oder 3, wobei der Prozessor (130) so konfiguriert ist, dass er das zweite Modell durch Training mit den für jeden Mischschritt berechneten mehreren oberen Faktordaten und den endgültigen tatsächlichen Viskositätsdaten unter Verwendung eines vorbestimmten Algorithmus erzeugt.

5. Einrichtung nach Anspruch 4, wobei:
der Prozessor (130) so konfiguriert ist, dass er die Vorhersagegenauigkeit des zweiten Modells überprüft; und
wobei, wenn die Vorhersagegenauigkeit des zweiten Modells größer oder gleich einer vorbestimmten Rate ist, trainiert der Prozessor (130) das zweite Modell jedes Mal neu oder aktualisiert er es, wenn neue Daten erzeugt werden, und wenn die Vorhersagegenauigkeit des zweiten Modells kleiner als die vorbestimmte Rate ist, ändert der Prozessor (130) den Algorithmus.

6. Einrichtung nach einem der Ansprüche 1 bis 5, wobei der Prozessor (130) so konfiguriert ist, dass er das Mischmodul (120) steuert durch:
Berechnen einer neuen endgültigen vorhergesagten Viskosität durch Ändern der Einstellungen der Mischprozessdaten, die anhand eines ersten Modells und eines zweiten Modells als in hohem Maße korreliert mit der endgültigen tatsächlichen Viskosität der Aufschlämmung identifiziert wurden, und Eingeben der aufgrund der Änderung der Einstellungen geänderten Mischprozessdaten in das zweite Modell, wenn die endgültige vorhergesagte Viskosität nicht der Sollviskosität entspricht; und
Berechnen der Einstellungen der Mischprozessfaktoren, wobei sichergestellt wird, dass die endgültige vorhergesagte Viskosität der Sollviskosität entspricht, indem ein Verfahren wiederholt wird, bei dem die Einstellungen der Mischprozessdaten geändert und eine endgültige vorhergesagte Viskosität berechnet wird, bis die endgültige vorhergesagte Viskosität der Sollviskosität entspricht.

7. Verfahren zur Steuerung der Viskosität einer Aufschlämmung, umfassend:
Steuern eines Mischmoduls (120) durch einen Prozessor (130) zum Mischen von Rohstoffen für eine Sekundärbatterie;
Durchführen von maschinellem Lernen durch den Prozessor (130) zur Vorhersage der Viskosität der Aufschlämmung und Vorhersage der Viskosität der Aufschlämmung in Echtzeit während eines Mischprozesses durch maschinelles Lernen; und
Anpassen der Bedingungen des vom Mischmodul (120) durchgeführten Mischvorgangs durch den Prozessor (130) derart, dass eine vorhergesagte Viskosität der Aufschlämmung einer Sollviskosität entspricht,
wobei der Prozessor (130), um die Viskosität der Aufschlämmung in Echtzeit vorherzusagen, konfiguriert ist zum:
Erzeugen eines ersten Modells auf der Grundlage von Mischprozessdaten und endgültigen tatsächlichen Viskositätsdaten, wobei das erste Modell ein Modell zur Extraktion von Mischprozessdaten ist, die in hohem Maße mit der endgültigen Viskosität der Aufschlämmung korrelieren,
Identifizieren mindestens eines obersten Faktor, der mit einer endgültigen tatsächlichen Viskosität unter Verwendung eines ersten Modells in hohem Maße korreliert ist, Berechnen mehrerer oberer Faktordaten durch Vorverarbeitung des identifizierten obersten Faktors für jeden Mischschritt und Erzeugen eines zweiten Modells auf der Grundlage der für jeden Mischschritt berechneten mehreren oberen Faktordaten, wobei das zweite Modell ein Modell zur Vorhersage der Viskosität der Aufschlämmung ist, und
Berechnen einer endgültigen vorhergesagten Viskosität durch Eingabe der Mischprozessdaten in ein zweites Modell zu Beginn des Mischens.

8. Verfahren nach Anspruch 7, wobei in dem Schritt des Vorhersagens der Viskosität der Aufschlämmung in Echtzeit der Prozessor (130) mindestens einen MischprozessDatenwert, der in hohem Maße mit der Viskosität der Aufschlämmung korreliert, aus mehreren Mischprozess-Daten durch maschinelles Lernen extrahiert und auf dieser Grundlage eine Vorhersage der Viskosität der Aufschlämmung durchführt.

9. Verfahren nach Anspruch 7 oder 8, wobei der Prozessor (130) das erste Modell durch Training mit N Mischprozessdaten und N endgültigen tatsächlichen Viskositätsdaten unter Verwendung eines vorbestimmten Algorithmus erzeugt.

10. Verfahren nach Anspruch 7, 8 oder 9, wobei der Prozessor (130) das zweite Modell durch Training mit den für jeden Mischschritt berechneten mehreren oberen Faktordaten und den endgültigen tatsächlichen Viskositätsdaten unter Verwendung eines vorbestimmten Algorithmus erzeugt.

11. Verfahren nach Anspruch 10, wobei:
der Prozessor (130) die Vorhersagegenauigkeit des zweiten Modells prüft; und,
wenn die Vorhersagegenauigkeit des zweiten Modells größer oder gleich einer vorbestimmten Rate ist, trainiert der Prozessor (130) das zweite Modell jedes Mal neu oder aktualisiert er es, wenn neue Daten erzeugt werden, und wenn die Vorhersagegenauigkeit des zweiten Modells kleiner als die vorbestimmte Rate ist, ändert der Prozessor (130) den Algorithmus.

12. Verfahren nach einem der Ansprüche 7 bis 11, wobei der Prozessor (130) im Schritt des Einstellens der Bedingungen des vom Mischmodul (120) durchgeführten Mischprozesses das Mischmodul (120) steuert durch:
Berechnen einer neuen endgültigen vorhergesagten Viskosität durch Ändern der Einstellungen der Mischprozessdaten, die anhand eines ersten Modells und eines zweiten Modells als in hohem Maße korreliert mit der endgültigen tatsächlichen Viskosität der Aufschlämmung identifiziert wurden, und Eingeben der aufgrund der Rückänderung der Einstellungen geänderten Mischprozessdaten in das zweite Modell, wenn die endgültige vorhergesagte Viskosität nicht der Sollviskosität entspricht; und
Berechnen der Einstellungen der Mischprozessfaktoren, wobei sichergestellt wird, dass die endgültige vorhergesagte Viskosität der Sollviskosität entspricht, indem ein Verfahren wiederholt wird, bei dem die Einstellungen der Mischprozessdaten geändert und eine endgültige vorhergesagte Viskosität berechnet wird, bis die endgültige vorhergesagte Viskosität der Sollviskosität entspricht.

## Revendications

1. Appareil pour commander la viscosité d'une suspension, comprenant :
un module de mélange (120) pour mélanger des matières premières destinées à une batterie secondaire ; et
un processeur (130) configuré pour effectuer un apprentissage automatique pour une prédiction de la viscosité de la suspension, prédire la viscosité de la suspension en temps réel pendant un processus de mélange grâce à l'apprentissage automatique, et pour ajuster des conditions du processus de mélange effectué par le module de mélange (120) de telle sorte qu'une viscosité prédictive de la suspension corresponde à une viscosité cible ;
dans lequel le processeur (130) est configuré pour :
générer un premier modèle sur la base de données de processus de mélange et de données de viscosité réelle finale, le premier modèle étant un modèle d'extraction de données de processus de mélange fortement corrélées à une viscosité finale de la suspension,
identifier au moins un facteur prépondérant fortement corrélé à une viscosité réelle finale à l'aide d'un premier modèle, calculer des données de facteurs prépondérants multiples par prétraitement du facteur prépondérant identifié pour chaque étape de mélange, et générer un second modèle basé sur les données de facteurs prépondérants multiples calculées pour chaque étape de mélange, le second modèle étant un modèle de prédiction de la viscosité de la suspension, et
calculer une viscosité prédictive finale en entrant les données de processus de mélange dans un second modèle au début du mélange.

2. Appareil selon la revendication 1, dans lequel le processeur (130) est configuré pour extraire au moins une donnée de processus de mélange fortement corrélée à la viscosité de la suspension à partir de données de processus de mélange multiples grâce à l'apprentissage automatique, et effectue une prédiction de la viscosité de la suspension sur cette base.

3. Appareil selon la revendication 1 ou 2, dans lequel le processeur (130) est configuré pour générer le premier modèle par entraînement avec N données de processus de mélange et N données de viscosité réelle finale à l'aide d'un algorithme prédéterminé.

4. Appareil selon la revendication 1, 2 ou 3, dans lequel le processeur (130) est configuré pour générer le second modèle par entraînement eavec les données de facteurs prépondérants multiples calculées pour chaque étape de mélange et les données de viscosité réelle finale à l'aide d'un algorithme prédéterminé.

5. Appareil selon la revendication 4 dans lequel :
le processeur (130) est configuré pour vérifier la précision de prédiction du second modèle ; et,
si la précision de prédiction du second modèle est supérieure ou égale à un taux prédéterminé, le processeur (130) ré-entraîne ou met à jour le second modèle chaque fois que de nouvelles données sont générées et, si la précision de prédiction du second modèle est inférieure au taux prédéterminé, le processeur (130) modifie l'algorithme.

6. Appareil selon l'une quelconque des revendications 1 à 5, dans lequel le processeur (130) est configuré pour commander le module de mélange (120) par :
le calcul d'une nouvelle viscosité prédictive finale en modifiant des paramètres des données de processus de mélange identifiées comme étant fortement corrélées avec une viscosité réelle finale de la suspension à partir d'un premier modèle et d'un second modèle, et l'intégration de données de processus de mélange modifiées par la modification des paramètres dans le second modèle, si la viscosité prédictive finale ne correspond pas à la viscosité cible ;
le calcul des paramètres de facteurs de processus de mélange en veillant à ce que la viscosité prédictive finale atteigne la viscosité cible, en répétant une procédure de modification de paramètres de données de processus de mélange et en calculant une viscosité prédictive finale jusqu'à ce que la viscosité prédictive finale atteigne la viscosité cible.

7. Procédé de commande de la viscosité d'une suspension, comprenant :
la commande, par l'intermédiaire d'un processeur (130), d'un module de mélange (120) pour mélanger des matières premières destinées à une batterie secondaire ;
la réalisation, par l'intermédiaire du processeur (130), d'un apprentissage automatique pour une prédiction de la viscosité de la suspension et la prédiction de la viscosité de la suspension en temps réel pendant un processus de mélange grâce à l'apprentissage automatique ; et
l'ajustement, par l'intermédiaire du processeur (130), des conditions du processus de mélange effectué par le module de mélange (120) de telle sorte qu'une viscosité prédictive de la suspension corresponde à une viscosité cible,
afin de prédire la viscosité de la suspension en temps réel, le processeur (130) est configuré pour :
générer un premier modèle sur la base de données de processus de mélange et de données de viscosité réelle finale, le premier modèle étant un modèle d'extraction de données de processus de mélange fortement corrélées à une viscosité finale de la suspension,
identifier au moins un facteur prépondérant fortement corrélé à une viscosité réelle finale à l'aide d'un premier modèle, calculer des données de facteurs prépondérants multiples par prétraitement du facteur prépondérant identifié pour chaque étape de mélange, et générer un second modèle basé sur les données de facteurs prépondérants multiples calculées pour chaque étape de mélange, le second modèle étant un modèle de prédiction de la viscosité de la suspension, et
calculer une viscosité prédictive finale en entrant les données de processus de mélange dans un second modèle au début du mélange.

8. Procédé selon la revendication 7, dans lequel, dans l'étape de prédiction de la viscosité de la suspension en temps réel, le processeur (130) extrait au moins une donnée de processus de mélange fortement corrélée à la viscosité de la suspension à partir de données de processus de mélange multiples grâce à l'apprentissage automatique, et effectue une prédiction de la viscosité de la suspension sur cette base.

9. Procédé selon la revendication 7 ou 8, dans lequel le processeur (130) génère le premier modèle par entraînement avec N données de processus de mélange et N données de viscosité réelle finale à l'aide d'un algorithme prédéterminé.

10. Procédé selon la revendication 7, 8 ou 9, dans lequel le processeur (130) génère le second modèle par entraînement avec les données de facteurs prépondérants multiples calculées pour chaque étape de mélange et les données de viscosité réelle finale à l'aide d'un algorithme prédéterminé.

11. Procédé selon la revendication 10, dans lequel :
le processeur (130) vérifie la précision de prédiction du second modèle ; et,
lorsque la précision de prédiction du second modèle est supérieure ou égale à un taux prédéterminé, le processeur (130) ré-entraîne ou met à jour le second modèle chaque fois que de nouvelles données sont générées et, lorsque la précision de prédiction du second modèle est inférieure au taux prédéterminé, le processeur (130) modifie l'algorithme.

12. Procédé selon l'une quelconque des revendications 7 à 11, dans lequel, lors de l'étape d'ajustement de conditions du processus de mélange effectué par le module de mélange (120), le processeur (130) commande le module de mélange (120) par :
le calcul d'une nouvelle viscosité prédictive finale en modifiant des paramètres des données de processus de mélange identifiées comme étant fortement corrélées avec une viscosité réelle finale de la suspension à partir d'un premier modèle et d'un second modèle, et l'intégration des données de processus de mélange modifiées par la modification des paramètres en retour dans le second modèle, si la viscosité prédictive finale ne correspond pas à la viscosité cible ;
le calcul des paramètres de facteurs de processus de mélange en veillant à ce que la viscosité prédictive finale atteigne la viscosité cible, en répétant une procédure de modification de paramètres de données de processus de mélange et en calculant une viscosité prédictive finale jusqu'à ce que la viscosité prédictive finale atteigne la viscosité cible.
